# EUROPEAN PATENT APPLICATION

(11) **EP 4 130 093 A1**
(43) Date of publication of application: **08.02.2023**
(21) Application number: 21780959.9
(22) Date of filing: 30.03.2021
(51) Int. Cl.: C08G 59/50, C08G 59/68, C09J 11/06, C09J 163/00, C09K 3/10

(54) **EPOXY AMINE ADDUCT, CURING CATALYST, RESIN COMPOSITION, SEALING MATERIAL, ADHESIVE AND CURED ARTICLE**

(30) Priority: 31.03.2020 JP 2020064473
(71) Applicant: Namics Corporation, Niigata-shi, Niigata 950-3131 (JP)
(72) Inventor: NAKAI, Yuya, Niigata-shi, Niigata 950-3131 (JP); NAGATA, Rieko, Niigata-shi, Niigata 950-3131 (JP)
(74) Representative: Mathys & Squire
(86) International application number: PCT/JP2021/013735
(87) International publication number: WO 2021/201060

(57) **Abstract**

An object of the present invention is to provide an epoxy amine adduct, a curing catalyst, a resin composition, a sealing material, an adhesive agent, and a cured product, which have good characteristics. There is prepared an epoxy amine adduct in which a value of (melting onset temperature at a temperature increasing rate of 50°C/min)/(melting onset temperature at a temperature increasing rate of 10°C/min) in differential scanning calorimetry (DSC) is 1.00 or more and 1.10 or less. There are prepared a curing catalyst for epoxy resin containing the epoxy amine adduct, a resin composition containing the curing catalyst, a sealing material or an adhesive agent each containing the resin composition, and a cured product obtained by curing the resin composition.

## Description

### TECHNICAL FIELD

The present invention relates to an epoxy amine adduct, a curing catalyst, a resin composition, a sealing material, an adhesive agent, and a cured product.

### BACKGROUND ART

A one-component epoxy resin-based adhesive agent contains a base resin and a curing catalyst. A curing catalyst is considered a material that most influences the pot life and curing condition of an adhesive agent. Currently, various curing catalysts used in a one-component epoxy resin-based adhesive agent are commercially available. The mainstream is of the type that thermosetting resin or thermoplastic resin is modified with a functional group such as amine (JP-A-59-053526; JP-A-3-177418) and of the type that an amine-based curing catalyst is covered with a polymer body shell (JP-A-2000-080146).

### SUMMARY OF INVENTION

### PROBLEMS TO BE SOLVED BY INVENTION

An object of the present invention is to provide an epoxy amine adduct, a curing catalyst, a resin composition, a sealing material, an adhesive agent, and a cured product, which have good characteristics.

### SOLUTION TO PROBLEMS

An embodiment of the present invention is an epoxy amine adduct in which in differential scanning calorimetry (DSC), a value of (melting onset temperature at a temperature increasing rate of 50°C/min)/(melting onset temperature at a temperature increasing rate of 10°C/min) is 1.00 or more and 1.10 or less. The value of (melting onset temperature at a temperature increasing rate of 50°C/min)/(melting onset temperature at a temperature increasing rate of 10°C/min) may be 1.01 or more and 1.05 or less. In differential scanning calorimetry (DSC) at a temperature increasing rate of 10°C/min, an absolute value of (maximum heat flow [mW/mg])/(melting heat [J/g]) in melting may be 0.01 or more and 0.10 or less. The absolute values of (maximum heat flow [mW/mg])/(melting heat [J/g]) may be 0.029 or more and 0.042 or less. A compound to be adducted to amine may have a biphenyl backbone or a naphthyl backbone and one epoxy group.

Another embodiment of the present invention is a curing catalyst for epoxy resin, which contains any of the above-described epoxy amine adducts.

A further embodiment of the present invention is a resin composition which contains the above-described curing catalyst.

A further embodiment of the present invention is a sealing material or an adhesive agent each containing the above-described resin composition.

A cured product of the resin composition is also one embodiment of the present invention.

A further embodiment of the present invention is a production method of any of the above-described epoxy amine adducts, including a step of adducting to amine a compound having a biphenyl backbone or a naphthyl backbone and one epoxy group.

### == Cross-Reference to Related Documents ==

The present application claims the right of priority on the basis of Japanese Patent Application No. 2020-64473 filed March 31, 2020. The basic application is incorporated herein by reference.

### BRIEF DESCRIPTION OF DRAWINGS

Fig. 1 is a diagram illustrating structural formulae of compounds used as a curing catalyst in Examples.
Fig. 2 is graphs obtained when calculating a melting peak temperature in Examples.

### DESCRIPTION OF EMBODIMENTS

An object, characteristic, advantage, and idea of the present invention are apparent to those skilled in the art by the description of the present specification, and the present invention can be easily reproduced by those skilled in the art based on the description of the present specification. The below-described embodiments, specific examples, and others of the present invention illustrate preferred aspects of the present invention for exemplification and explanation, and the present invention is not limited thereto. It is apparent to those skilled in the art that various changes and modifications can be made based on the description of the present specification within the purpose and scope of the present invention disclosed herein.

### == Epoxy Amine Adduct ==

In an epoxy amine adduct according to the present embodiment, a value of (melting onset temperature at a temperature increasing rate of 50°C/min)/(melting onset temperature at a temperature increasing rate of 10°C/min) in differential scanning calorimetry (DSC) is 1.00 or more and 1.10 or less.

The epoxy amine adduct which exhibits such characteristics is useful as a curing catalyst for thermosetting resin such as epoxy resin. Hereinafter, a curing catalyst, a resin composition, and others, in which the epoxy amine adduct according to the present invention is used, will be described.

### == Curing Catalyst ==

### <Structure of Epoxy Amine Adduct A>

A curing catalyst for epoxy resin according to the present embodiment contains an epoxy amine adduct having structural formulae (I) to (IV) below. As described herein, the curing catalyst refers to a catalyst that has the function of promoting initiation and/or progress of self-polymerization of a base resin or polymerization of a base resin and a curing agent. 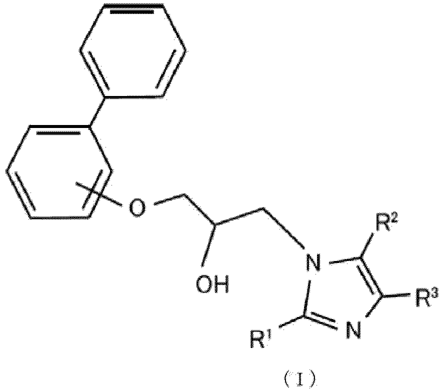 (In the formula, R¹ is a group selected from hydrogen, phenyl, and C1-C17 alkyls, and R² and R³ are each independently a group selected from hydrogen and C1-C6 alkyls.) R¹ may be a group selected from phenyl and C1-C12 alkyls. The structure of an alkyl group of R¹, R² and R³ may be linear, branched, or cyclic. 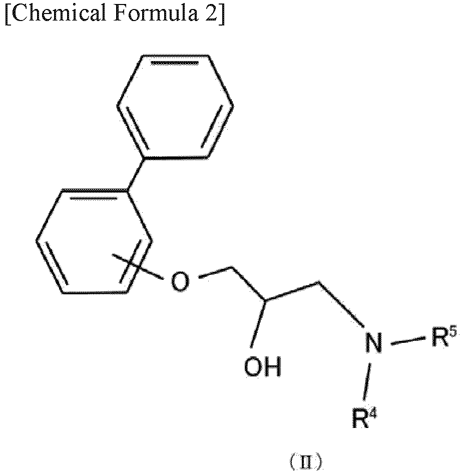 (In the formula, R⁴ and R⁵ are each a group selected from hydrogen, a phenyl group, and C1-C6 alkyl, aralkyl, alkenyl, and aryl groups having a linear structure, a branched structure, or a cyclic structure.) 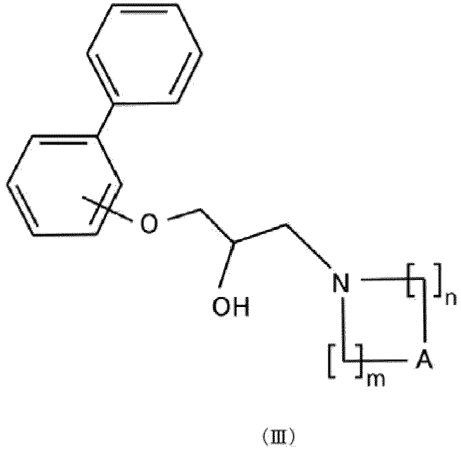 (In the formula, n and m are each 1 to 4, and the sum of n and m is 3 to 5. A is CH₂, O, or NR⁶. R⁶ is a group selected from hydrogen, a phenyl group, and C1-C6 alkyl, aralkyl, and alkenyl groups having a linear structure, a branched structure, or a cyclic structure.) 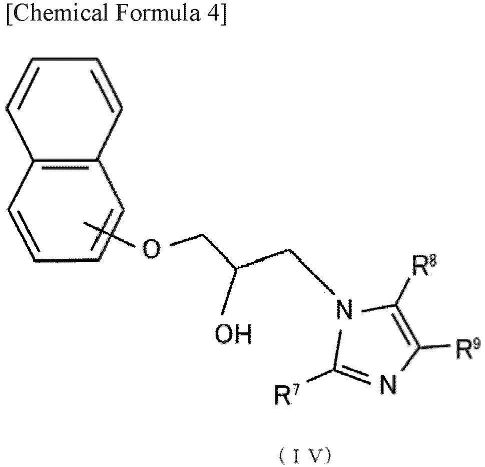 (In the formula, R⁷ is a group selected from hydrogen, phenyl, and C1-C17 alkyls. R⁸ and R⁹ are each independently a group selected from hydrogen and C1-C6 alkyls.) R⁷ may be a group selected from phenyl and C1-C12 alkyls. An alkyl group of R⁷, R⁸, and R⁹ may be a linear structure, a branched structure, or a cyclic structure.

The epoxy amine adducts of (I) to (III) are a compound obtained by reaction between amine and a biphenyl compound having one epoxy group. The epoxy amine adduct of (IV) is a compound obtained by reaction between amine and a naphthyl compound having one epoxy group.

The biphenyl compound and the naphthyl compound having one epoxy group may optionally have another substituent group. Examples thereof include a chained alkyl group (for example, a methyl group, an ethyl group, an n-propyl group, an isopropyl group, an n-butyl group, a sec-butyl group, a tert-butyl group, an isobutyl group, an n-pentyl group, an isopentyl group, a neopentyl group, a tert-pentyl group, an n-hexyl group, an isohexyl group, an n-heptyl group, and an n-octyl group), a cycloalkyl group (for example, a cyclopropyl group, a cyclobutyl group, a cyclopentyl group, a cyclohexyl group, a cycloheptyl group, and a cyclooctyl group), an allyl group, an aryl group (for example, a phenyl group and a benzyl group), an acyl group, an acyloxy group, an alkoxy group, a halogen group, an alkyl halide group, a sulfone group, a nitro group, and a carboxyl group. The one epoxy group substituting on the biphenyl and the naphthyl may substitute at any position.

The structure of epoxy preferably has a biphenyl backbone or a naphthyl backbone, such that the pot life is lengthened. It is considered that the principle of the effect is that presence of a biphenyl backbone or a naphthyl backbone in the structure of epoxy in the epoxy amine adduct lowers solubility of the epoxy amine adduct to epoxy resin (base resin) at normal temperature, and therefore the pot life is lengthened. However, we do not stick to this theory. Here, with increase of the number of aromatic rings linked directly or through a carbon-carbon single bond (for example, an anthracene backbone) in the structure of epoxy of the epoxy amine adduct, solubility to epoxy resin is lowered even at high temperature, and solubility to epoxy resin is also lowered when heated. Therefore, this is not preferable.

Also, when the epoxy structure in the epoxy amine adduct is a phenyl backbone, the pot life is shortened. It is considered that this is because the obtained adduct is low in intermolecular interaction, which increases solubility of a curing catalyst to epoxy resin at normal temperature.

Also, in terms of pot life, the number of epoxy groups of an epoxy resin to be adducted to amine is preferably one. It is considered that pot life is more likely to deteriorate with increase of the number of epoxy groups present in an epoxy resin to be adducted to amine, because the number of amino groups to be added increases.

Examples of amine to be adducted include imidazole compounds and primary amine compounds or secondary amine compounds. Among the imidazole compounds, imidazole, 2-methyl imidazole, 2-undecyl imidazole, 2-heptadecyl imidazole, 2-phenyl imidazole, and 2-ethyl-4-methyl imidazole are preferable. From the viewpoint of striking a balance between curing properties and pot life, 2-methyl imidazole and 2-undecyl imidazole are more preferable. Examples of the commercially available product include, as an imidazole compound to be adducted, 2MZ-H, C11Z, C17Z, 2PZ, and 2E4MZ manufactured by Shikoku Chemicals Corporation. When 2-methyl imidazole is adducted, the one epoxy group substituting on the biphenyl is preferably at the ortho or meta position, and more preferably at the ortho position, from the viewpoint of a melting point. At the ortho position, a balance between dispersion of a curing catalyst and curing reaction at 100°C or higher is best. The one epoxy group substituting on the naphthyl may be at the α- or β-position, but preferably at the α-position.

Although the primary amine compounds or the secondary amine compounds are not particularly limited, examples thereof include aliphatic amine, alicyclic amine, and aromatic amine.

Although the aliphatic amine is not particularly limited, examples thereof include alkylamine such as methylamine, ethylamine, propylamine, butylamine, and dibutylamine.

Although the alicyclic amine is not particularly limited, examples thereof include cyclopropylamine, cyclobutylamine, cyclopentylamine, cyclohexylamine, isophorondiamine, pyrrolidine, piperidine, hexamethyleneimine, N-methylpiperazine, N-phenylpiperazine, and morpholine.

Although the aromatic amine is not particularly limited, examples thereof include aniline, toluidine, benzylamine, naphthylamine, diaminodiphenylmethane, and diaminodiphenylsulfone.

### <Production Method of Epoxy Amine Adduct>

The epoxy amine adduct of (I) to (III) can be produced by, for example, reaction of a methyl imidazole derivative having an imidazole ring that has the same modification as the above-described compound, with 2-{[([1,1'-biphenyl]-2-yl)oxy]methyl}oxirane, 2-{[([1,1'-biphenyl]-3-yl)oxy]methyl}oxirane or 2-{ [([1, 1'-biphenyl]-4-yl)oxy]methyl}oxirane. However, the production method is not limited thereto. The production can be performed by a method known to those skilled in the art.

The epoxy amine adduct of (IV) can be produced by reaction of a methyl imidazole derivative having an imidazole ring that has the same modification as the above-described compound, with 2-(naphthalen-1-yloxymethyl)oxirane or 2-(naphthalen-2-yloxymethyl)oxirane. However, the production method is not limited thereto. The production can be performed by a method known to those skilled in the art.

A solvent used for synthesis reaction of the epoxy amine adduct are not particularly limited. Examples thereof include hydrocarbons such as benzene, toluene, xylene, cyclohexane, hexane, heptane, octane, mineral spirit, and naphtha; chained ethers such as dimethyl ether, diethyl ether, and ethyl methyl ether; cyclic ethers such as tetrahydrofuran and tetrahydropyran; nitriles such as acetonitrile, propionitrile, and butyronitrile; amides such as acetamide, formamide, N,N-dimethylacetamide, and N,N-dimethylformamide; sulfoxides such as dimethyl sulfoxide and diethyl sulfoxide; ketones such as acetone, methyl ethyl ketone (MEK), methyl isobutyl ketone (MIBK), and isophorone; esters such as ethyl acetate, acetic acid-n-butyl, and propylene glycol monomethyl ether acetate; alcohols such as methanol, ethanol, isopropanol, n-butanol, butyl cellosolve, and butyl carbitol; and water. These solvents may be used individually or in combination of two or more.

### <Characteristics of Epoxy Amine Adduct>

These epoxy amine adducts do not have a BPA (bisphenol A) backbone. Therefore, the cured product does not generate BPA which is said to pose a risk to the health of living organisms. Accordingly, these epoxy amine adducts have high safety. For example, when the epoxy amine adduct disclosed herein is used as a curing catalyst for bisphenol A type epoxy resin, generation of BPA from the cured product can be significantly suppressed compared to when a known bisphenol A type epoxy amine adduct is used. It is considered that this is because the structure of the polymer allows BPA to be generated only from the terminal of the polymerized bisphenol A type epoxy resin.

Also, as illustrated in Examples, these epoxy amine adducts have long pot life and exhibit sufficient curing properties when used as a curing catalyst for epoxy resin. It is considered that the principle of these effects is that low compatibility between a biphenyl backbone or a naphthyl backbone contained in the curing catalyst and an epoxy resin at normal temperature lengthens pot life. However, we do not stick to this theory. Also, compatibility between a biphenyl backbone or a naphthyl backbone and an epoxy resin is high at 100°C or higher. Therefore, dispersion of the curing catalyst and curing reaction proceed in a balanced manner. Accordingly, the residue of an unreacted curing catalyst decreases, and a uniform coating film can be formed through curing.

The melting point of these epoxy amine adducts can be calculated, for example, by the following procedure, using a differential scanning calorimeter (DSC 204 F1 Phoenix (registered trademark)) (manufactured by NETZSCH). First, 5 mg of each resin composition is weighed into an aluminum pan, and the aluminum pan is sealed with an aluminum lid. Thereafter, the center of this lid is punched with a needle to prepare a measurement sample. Next, this measurement sample is measured for a heat flow (mW/mg) while increasing in temperature under the conditions of nitrogen atmosphere (100 mL/min), a temperature ranging from 25°C to 250°C, and a temperature increasing rate of 10°C/min. A temperature at which a peak top is obtained on the graph is calculated by an analysis software (NETZSCH Proteus-Thermal Analysis Version 6.1.0 B). This temperature is called a melting peak temperature herein.

Also, a heat flow at a peak temperature (i.e., maximum heat flow) and an area of a peak (i.e., melting heat) are analyzed by the analysis software of the calorimeter when calculating the melting peak temperature as described above. Then, an absolute value of (maximum heat flow [mW/mg])/(melting heat [J/g]) is calculated. Next, the heat flow (mW/mg) is measured in the range of 25 to 250°C, under the conditions of a temperature increasing rate of 10°C/min and a temperature increasing rate of 50°C/min. The melting onset temperature (°C) under each condition is analyzed. As temperature increasing rate dependency, (melting onset temperature at a temperature increasing rate of 50°C/min)/(melting onset temperature at a temperature increasing rate of 10°C/min) is calculated.

With increase of the absolute value of (maximum heat flow [mW/mg])/(melting heat [J/g]), dissolution of the curing catalyst to resin in an unintended temperature range is less likely to occur. Therefore, the pot life can be expected to be lengthened. Also, with decrease of the temperature increasing rate dependency, dissolution of the curing catalyst to resin in an intended temperature range occurs instantaneously. Therefore, short-time curing properties can be expected to be obtained while maintaining sufficient pot life.

With respect to the temperature increasing rate dependency of these epoxy amine adducts, (melting onset temperature at a temperature increasing rate of 50°C/min)/(melting onset temperature at a temperature increasing rate of 10°C/min), when the heat flow (mW/mg) is measured under the conditions of a temperature increasing rate of 10°C/min and 50°C/min, is preferably 1.00 or more and 1.10 or less, more preferably 1.00 or more and 1.08 or less, and further preferably 1.00 or more and 1.05 or less. Also, the absolute value of maximum heat flow/melting heat, when the heat flow (mW/mg) is measured under the condition of a temperature increasing rate of 10°C/min, is preferably 0.01 or more, more preferably 0.02 or more, and further preferably 0.029 or more, and preferably 0.1 or less, more preferably 0.05 or less, and further preferably 0.042 or less.

### <Curing Catalyst>

The curing catalyst disclosed herein may contain one or a plurality of the above-described epoxy amine adducts. Also, at least one curing catalyst other than the above-described epoxy amine adducts may be contained.

Other curing catalysts are not particularly limited. Examples thereof include a curing catalyst of the type that thermoplastic resin is modified with a functional group such as amine and a curing catalyst of the type that an amine-based curing agent is covered with a polymer body shell, both being a commercially available curing catalyst used in a one-component epoxy resin-based adhesive agent. However, other curing catalysts are not limited thereto. When the curing catalyst contains a plurality of compounds, the ratio of the above-described epoxy amine adduct is, but not particularly limited to, preferably 1 to 100 wt% to the total amount of the curing catalyst, more preferably 10 to 100 wt%, further preferably 30 to 100 mass %, particularly preferably 50 to 100 wt%, and most preferably 70 to 100 wt%.

### == Resin Composition ==

The resin composition disclosed herein contains: an epoxy amine adduct having the above-described characteristics; and an epoxy resin. The epoxy amine adduct may have any of structural formulae (I) to (IV). The epoxy resin is not particularly limited and may be either a monofunctional epoxy resin or a multifunctional epoxy resin.

The monofunctional epoxy resin is an epoxy resin having one epoxy group and has been used as a reactive diluent for adjusting the viscosity of an epoxy resin composition. A monofunctional epoxy resin is roughly classified into an aliphatic monofunctional epoxy resin and an aromatic monofunctional epoxy resin. From the viewpoint of volatility, the epoxy equivalent weight in a monofunctional epoxy resin is preferably 180 to 400 g/eq.

Examples of the aromatic monofunctional epoxy resin include, but not limited to, phenyl glycidyl ether, cresyl glycidyl ether, p-s-butylphenyl glycidyl ether, styrene oxide, p-tert-butylphenyl glycidyl ether, o-phenylphenol glycidyl ether, m-phenylphenol glycidyl ether, p-phenylphenol glycidyl ether, and N-glycidyl phthalimide. Among these, p-tert-butylphenyl glycidyl ether and phenyl glycidyl ether are preferable, and p-tert-butylphenyl glycidyl ether is particularly preferable.

Examples of the aliphatic monofunctional epoxy resin include, but not limited to, n-butyl glycidyl ether, 2-ethylhexyl glycidyl ether, α-pinene oxide, allyl glycidyl ether, 1-vinyl-3,4-epoxycyclohexane, 1,2-epoxy-4-(2-methyloxiranyl)-1-methylcyclohexane, 1,3-bis(3-glycidoxypropyl)-1,1,3,3-tetramethyldisiloxane, and neodecanoic acid glycidyl ester.

The multifunctional epoxy resin refers to an epoxy resin having two or more epoxy groups. Therefore, the resin composition of the present disclosure may contain a bifunctional epoxy resin, a trifunctional epoxy resin, a tetrafunctional epoxy resin, or the like. The multifunctional epoxy resin is roughly classified into an aliphatic multifunctional epoxy resin and an aromatic multifunctional epoxy resin.

Examples of the aliphatic multifunctional epoxy resin include, but not limited to, diepoxy resin such as (poly)ethylene glycol diglycidyl ether, (poly)propylene glycol diglycidyl ether, butanediol diglycidyl ether, neopentyl glycol diglycidyl ether, 1,6-hexanediol diglycidyl ether, trimethylolpropane diglycidyl ether, polytetramethylene ether glycol diglycidyl ether, glycerin diglycidyl ether, neopentyl glycol diglycidyl ether, cyclohexane type diglycidyl ether, and dicyclopentadiene type diglycidyl ether; triepoxy resin such as -trimethylolpropane triglycidyl ether and glycerin triglycidyl ether; alicyclic epoxy resin such as vinyl(3,4-cyclohexene)dioxide and 2-(3,4-epoxycyclohexyl)-5,1-spiro-(3,4-epoxycyclohexyl)-m-dioxane; glycidylamine type epoxy resin such as tetraglycidyl bis(aminomethyl)cyclohexane; hydantoin type epoxy resin such as 1,3-diglycidyl-5-methyl-5-ethylhydantoin; and epoxy resin having a silicone backbone such as -1,3-bis(3-glycidoxypropyl)-1,1,3,3-tetramethyldisiloxane.

Of the above-described examples, "cyclohexane type diglycidyl ether" refers to a compound having a structure in which two glycidyl groups are each linked through an ether bond to a divalent saturated hydrocarbon group having one cyclohexane ring as a parent structure. "Dicyclopentadiene type diglycidyl ether" refers to a compound having a structure in which two glycidyl groups are each linked through an ether bond to a divalent saturated hydrocarbon group having a dicyclopentadine backbone as a parent structure. As cyclohexane type diglycidyl ether, cyclohexanedimethanol diglicidyl ether is particularly preferable.

The aromatic multifunctional epoxy resin is a multifunctional epoxy resin having a structure in which an aromatic ring such as a benzene ring is contained. Many of epoxy resins which have been often used, such as bisphenol A type epoxy resin, are of this type. Examples of the aromatic multifunctional epoxy resin include, but not limited to, bisphenol A type epoxy resin; branched multifunctional bisphenol A type epoxy resin such as p-glycidyloxyphenyl dimethyltrisbisphenol A diglycidyl ether; bisphenol F type epoxy resin; bisphenol E type epoxy resin; bisphenol S type epoxy resin; novolac type epoxy resin; tetrabromo bisphenol A type epoxy resin; fluorene type epoxy resin; biphenyl aralkyl epoxy resin; diepoxy resin such as 1,4-phenyldimethanol diglycidyl ether; biphenyl type epoxy resin such as 3,3',5,5'-tetramethyl-4,4'-diglycidyloxybiphenyl; glycidylamine type epoxy resin such as diglycidyl aniline, diglycidyl toluidine, triglycidyl-p-aminophenol, and tetraglycidyl-m-xylylenediamine; and naphthalene ring-containing epoxy resin.

As the aromatic multifunctional epoxy resin, bisphenol F type epoxy resin, bisphenol A type epoxy resin, and glycidylamine type epoxy resin are preferable. Especially, those having an epoxy equivalent weight of 90 to 200 g/eq are preferable.

### <Curing Agent>

The resin composition of the present disclosure may contain at least one curing agent. As described herein, the curing agent refers to a compound that cures an epoxy resin as a base resin by reacting with an epoxy group to form a cross-linked structure.

Although the curing agent which may be contained in the resin composition of the present disclosure is not particularly limited, it contains a compound having an active group that is reactive with an epoxy group of an epoxy resin. Examples of the curing agent include nitrogen-containing compounds such as amine and a derivative thereof; oxygen-containing compounds such as carboxylic acid-terminated polyester, acid anhydride-based and phenol-based curing agents, bisphenol A and cresol novolac, and phenol-terminated epoxy resin; and thiol compounds.

Although the nitrogen-containing compounds such as amine and a derivative thereof are not particularly limited, examples thereof include: aliphatic polyamine such as triethylenetetramine, tetraethylenepentamine, m-xylenediamine, trimethylhexamethylenediamine, and 2-methylpentamethylenediamine; alicyclic polyamine such as iophoronediamine, 1,3-bisaminomethylcyclohexane, bis(4-aminocyclohexyl)methane, norbomenediamine, and 1,2-diaminocyclohexane; piperazine-type polyamine such as N-aminoethylpiperazine and 1,4-bis(2-amino-2-methylpropyl)piperazine; and aromatic polyamines such as diethyltoluenediamine, dimethylthio-toluenediamine, 4,4'-diamino-3,3'-diethyldiphenylmethane, bis(methylthio)toluenediamine, diaminodiphenylmethane, m-phenylenediamine, diaminodiphenylsulfone, diethyltoluenediamine, trimethylene bis(4-aminobenzoate), and polytetramethylene oxide-di-p-aminobenzoate. Examples of the commercially available product include T-12 (trade name, manufactured by Sanyo Chemical Industries, Ltd.) (amine equivalent weight: 116), Epicure-W and Epicure-Z (Yuka Shell Epoxy Co., Ltd., trade name), jER Cure (registered trademark)-W and jER Cure (registered trademark)-Z (Mitsubishi Chemical Corporation, trade name), Kayahard A-A, Kayahard A-B, and Kayahard A-S (Nippon Kayaku Co., Ltd., trade name), Totoamine HM-205 (Nippon Steel & Sumikin Chemical Co., Ltd., trade name), Adeka Hardener EH-101 (ADEKA Corporation, trade name), Epomik Q-640 and Epomik Q-643 (Mitsui Chemicals, Inc., trade name), DETDA80 (Lonza Co., trade name), and Totoamine HM-205 (Nippon Steel & Sumikin Chemical Co., Ltd., trade name).

Although the acid anhydride-based curing agent is not particularly limited, examples thereof include methyltetrahydrophthalic acid anhydrides, methylhexahydrophthalic acid anhydrides, alkylated tetrahydrophthalic acid anhydrides, methylhimic acid anhydrides, succinic acid anhydrides substituted with an alkenyl group, and glutaric acid anhydrides. In particular, preferable are 3,4-dimethyl-6-(2-methyl-1-propenyl)-1,2,3,6-tetrahydrophthalic acid anhydrides, 1-isopropyl-4-methyl-bicyclo[2.2.2]octo-5-ene-2,3-dicarboxylic acid anhydrides, norbornane-2,3-dicarboxylic acid anhydrides, methylnorbornane-2,3-dicarboxylic acid anhydrides, hydrogenated methylnadic acid anhydrides, succinic acid anhydrides substituted with an alkenyl group, and diethylglutaric acid anhydrides. The phenol-based curing agent refers to monomers, oligomers, and polymers in general which have a phenolic hydroxyl group. Examples thereof include phenol novolac resin and an alkylated or allylated product thereof, cresol novolac resin, phenol aralkyl (containing a phenylene or biphenylene backbone) resin, naphthol aralkyl resin, triphenol methane resin, and dicyclopentadiene type phenolic resin. Especially, allyl phenol novolac resin is preferable.

The thiol compound includes a hydrolyzable multifunctional thiol compound and a nonhydrolyzable multifunctional thiol compound.

Examples of the hydrolyzable multifunctional thiol compound include trimethylolpropane tris(3-mercaptopropionate) (manufactured by SC Organic Chemical Co., Ltd.: TMMP), tris-[(3-mercaptopropionyloxy)-ethyl]-isocyanurate (manufactured by SC Organic Chemical Co., Ltd.: TEMPIC), pentaerythritol tetrakis(3-mercaptopropionate) (manufactured by SC Organic Chemical Co., Ltd.: PEMP), tetraethyleneglycol bis(3-mercaptopropionate) (manufactured by SC Organic Chemical Co., Ltd.: EGMP-4), dipentaerythritol hexakis(3-mercaptopropionate) (manufactured by SC Organic Chemical Co., Ltd.: DPMP), pentaerythritol tetrakis(3-mercaptobutyrate) (manufactured by Showa Denko K.K.: Karenz MT (registered trademark) PE1), and 1,3,5-tris(3-mercaptobutyryloxyethyl)-1,3,5-triazine-2,4,6(1H,3H,5H)-trione (manufactured by Showa Denko K.K.: Karenz MT (registered trademark) NR1).

Examples of the nonhydrolyzable multifunctional thiol compound include 1,3,4,6-tetrakis(2-mercaptoethyl)glycoluril (trade name: TS-G, manufactured by Shikoku Chemicals Corporation), (1,3,4,6-tetrakis(3-mercaptopropyl)glycoluril (trade name: C3 TS-G, manufactured by Shikoku Chemicals Corporation), 1,3,4,6-tetrakis(mercaptomethyl)glycoluril, 1,3,4,6-tetrakis(mercaptomethyl)-3a-methyl glycoluril, 1,3,4,6-tetrakis(2-mercaptoethyl)-3a-methyl glycoluril, 1,3,4,6-tetrakis(3-mercaptopropyl)-3a-methyl glycoluril, 1,3,4,6-tetrakis(mercaptomethyl)-3a,6a-dimethyl glycoluril, 1,3,4,6-tetrakis(2-mercaptoethyl)-3a,6a-dimethyl glycoluril, 1,3,4,6-tetrakis(3-mercaptopropyl)-3a,6a-dimethyl glycoluril, 1,3,4,6-tetrakis(mercaptomethyl)-3a,6a-diphenyl glycoluril, 1,3,4,6-tetrakis(2-mercaptoethyl)-3a,6a-diphenyl glycoluril, 1,3,4,6-tetrakis(3-mercaptopropyl)-3a,6a-diphenyl glycoluril, pentaerythritol tripropanethiol (trade name: PEPT, manufactured by SC Organic Chemical Co., Ltd.), and pentaerythritol tetrapropanethiol.

Also, the nonhydrolyzable multifunctional thiol compound to be used may be a polythiol compound which is trifunctional or more than trifunctional and has two or more sulfide bonds in the molecule. Examples of such a thiol compound include aliphatic polythiol compounds such as 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, 1,1,3,3-tetrakis(mercaptomethylthio)propane, 1,1,2,2-tetrakis(mercaptomethylthio)ethane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 3-mercaptomethylthio-1,7-dimercapto-2,6-dithiaheptane, 3,6-bis(mercaptomethylthio)-1,9-dimercapto-2,5,8-trithianonane, 3-mercaptomethylthio-1,6-dimercapto-2,5-dithiahexane, 1,1,9,9-tetrakis(mercaptomethylthio)-5-(3,3-bis(mercaptomethylthio)-1-thiapropyl)3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-[2,2-bis(mercaptomethylthio)ethyl]-3,5,13,15-tetrakis(mercaptomethylthio)-1,17-dimercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahexadecane, 8-[bis(mercaptomethylthio)methyl]-3,4,12,13-tetrakis(mercaptomethylthio)-1,15-dimercapto-2,5,7,9,11,14-hexathiapentadecane, 4,6-bis[3,5-bis(mercaptomethylthio)-7-mercapto-2,6-dithiaheptylthio]-1,3-dithiane, 4-[3,5-bis(mercaptomethylthio)-7-mercapto-2,6-dithiaheptylthio]-6-mercaptomethylthio-1,3-dithiane, 1,1-bis[4-(6-mercaptomethylthio)-1,3-dithianylthio]-1,3-bis(mercaptomethylthio)propane, 1-[4-(6-mercaptomethylthio)-1,3-dithianylthio]-3-[2,2-bis(mercaptomethylthio)ethyl]-7,9-bis(mercaptomethylthio)-2,4,6,10-tetrathiaundecane, 3-[2-(1,3-dithietanyl)]methyl-7,9-bis(mercaptomethylthio)-1,11-dimercapto-2,4,6,10-tetrathiaundecane, 9-[2-(1,3-dithietanyl)]methyl-3,5,13,15-tetrakis(mercaptomethylthio)-1,17-dimercapto-2,6,8,10,12,16-hexathiaheptadecane, and 3-[2-(1,3-dithietanyl)]methyl-7,9,13,15-tetrakis(mercaptomethylthio)-1,17-dimercapto-2,4,6,10,12,16-hexathiaheptadecane; polythiol compounds having a cyclic structure such as 4,6-bis[4-(6-mercaptomethylthio)-1,3-dithianylthio]-6-[4-(6-mercaptomethylthio)-1,3-dithianylthio]-1,3-dithiane, 4-[3,4,8,9-tetrakis(mercaptomethylthio)-11-mercapto-2,5,7,10-tetrathiaundecyl]-5-mercaptomethylthio-1,3-dithiolane, 4,5-bis[3,4-bis(mercaptomethylthio)-6-mercapto-2,5-dithiahexylthio]-1,3-dithiolane, 4-[3,4-bis(mercaptomethylthio)-6-mercapto-2,5-dithiahexylthio]-5-mercaptomethylthio-1,3-dithiolane, 4-[3-bis(mercaptomethylthio)methyl-5,6-bis(mercaptomethylthio)-8-mercapto-2,4,7-trithiaoctyl]-5-mercaptomethylthio-1,3-dithiolane, 2-{bis[3,4-bis(mercaptomethylthio)-6-mercapto-2,5-dithiahexylthio]methyl}-1,3-dithiethane, 2-[3,4-bis(mercaptomethylthio)-6-mercapto-2,5-dithiahexylthio]mercaptomethylthiomethyl-1,3-dithiethane, 2-[3,4,8,9-tetrakis(mercaptomethylthio)-11-mercapto-2,5,7,10-tetrathiaundecylthio]mercaptomethylthiomethyl-1,3-dithiethane, 2-[3-bis(mercaptomethylthio)methyl-5,6-bis(mercaptomethylthio)-8-mercapto-2,4,7-trithiaoctyl]mercaptomethylthiomethyl-1,3-dithiethane, and 4-{ 1-[2-(1,3-dithietanyl)]-3-mercapto-2-thiapropylthio}-5-[1,2-bis(mercaptomethylthio)-4-mercapto-3-thiabutylthio]-1,3-dithiolane.

### <Constituent Ratio of Resin Composition>

The ratio of the curing catalyst in the resin composition is not particularly limited. However, when the resin composition is an epoxy homopolymerization system containing no curing agent, the ratio of the curing catalyst to the epoxy resin in the resin composition is preferably 0.1 to 50 wt%, more preferably 0.1 to 30 wt%, and further preferably 0.1 to 20 wt%.

When the resin composition contains the curing agent, this ratio to the epoxy resin in the resin composition is preferably 0.01 to 10 wt%, more preferably 0.01 to 5 wt%, and further preferably 0.01 to 1 wt%.

### <Other Ingredients of Resin Composition>

The curable composition of the present disclosure may contain, other than the base resin, curing catalyst, and curing agent, for example, the below-described ingredients as necessary.

### · Stabilizer

The resin composition of the present disclosure may be added with a stabilizer for improving storage stability and lengthening pot life. Known various stabilizers can be used as a stabilizer for a one-component type adhesive agent that contains epoxy resin as the base resin. This stabilizer is preferably at least one selected from the group consisting of a liquid boric acid ester compound, aluminum chelate, and organic acid.

Examples of the liquid boric acid ester compound include 2,2'-oxybis(5,5'-dimethyl-1,3,2-oxaborinane), trimethyl borate, triethyl borate, tri-n propyl borate, triisopropyl borate, tri-n-butyl borate, tripentyl borate, triallyl borate, trihexyl borate, tricyclohexyl borate, trioctyl borate, trinonyl borate, tridecyl borate, tridodecyl borate, trihexadecyl borate, trioctadecyl borate, tris(2-ethylhexyloxy)borane, bis(1,4,7,10-tetraoxaundecyl)(1,4,7,10,13-pentaoxatetradecyl)(1,4,7-trioxaundecyl)borane, tribenzyl borate, triphenyl borate, tri-o-tolyl borate, tri-m-tolyl borate, and triethanolamine borate.

An example of the aluminum chelate to be used is aluminum chelate A (manufactured by Kawaken Fine Chemicals Co., Ltd.). An example of the organic acid to be used is barbituric acid.

### · Filler

The resin composition of the present disclosure can be added with a filler.

Specific examples of the filler include a silica filler, a glass filler, an alumina filler, a titanium oxide filler, a boron nitride filler, an aluminum nitride filler, a talc filler, a calcium carbonate filler, a resin filler (for example, a polytetrafluoroethylene (PTFE) filler and a silicone rubber filler), and an electrically conductive filler such as silver, copper, and nickel. The shape is not particularly limited and may be hollow, spherical, or indefinite. Also, the filler may be surface treated.

### · Coupling agent

The resin composition of the present disclosure can be added with a coupling agent. The coupling agent is preferably a silane coupling agent, and various silane coupling agents based on epoxy, amino, vinyl, methacryl, acryl, mercapto, and others can be used. These silane coupling agents may be used individually or in combination of two or more.

Examples of the silane coupling agent include, as a silane coupling agent having an alkenyl group, vinyltrimethoxysilane (examples of the commercially available product include KBM-1003 manufactured by Shin-Etsu Chemical Co., Ltd., A-171 manufactured by Momentive Performance Materials Japan LLC, Z-6300 manufactured by Dow Coming Toray Co., Ltd., GENIOSEL XL10 manufactured by Wacker Asahikasei Silicone Co., Ltd., and Sila-Ace S210 manufactured by Nichibi Trading Co., Ltd.), vinyltriethoxysilane (examples of the commercially available product include KBE-1003 manufactured by Shin-Etsu Chemical Co., Ltd., A-151 manufactured by Momentive Performance Materials Japan LLC, Z-6519 manufactured by Dow Corning Toray Co., Ltd., GENIOSIL GF56 manufactured by Wacker Asahikasei Silicone Co., Ltd., and Sila-Ace S220 manufactured by Nichibi Trading Co., Ltd.), vinyltriacetoxysilane (an example of the commercially available product is GENIOSIL GF62 manufactured by Wacker Asahikasei Silicone Co., Ltd.), vinyltris(2-methoxyethoxy)silane (an example of the commercially available product is A-172 manufactured by Momentive Performance Materials Japan LLC), vinylmethyldimethoxysilane (examples of the commercially available product include A-2171 manufactured by Momentive Performance Materials Japan LLC and GENIOSIL XL12 manufactured by Wacker Asahikasei Silicone Co., Ltd.), octenyltrimethoxysilane (an example of the commercially available product is KBM-1083 manufactured by Shin-Etsu Chemical Co., Ltd.), allyltrimethoxysilane (an example of the commercially available product is Z-6825 manufactured by Dow Corning Toray Co., Ltd.), and p-styryltrimethoxysilane (an example of the commercially available product is KBM-1403 manufactured by Shin-Etsu Chemical Co., Ltd.). Further examples are, as a silane coupling agent having an acryl group, 3-acryloxypropyltrimethoxysilane and 3-acryloxypropyltriethoxysilane (an example of the commercially available product is KBM-5103 manufactured by Shin-Etsu Chemical Co., Ltd.). Other examples are, as a silane coupling agent having a methacryl group, 3-methacryloxypropylmethyldimethoxysilane (examples of the commercially available product include KBM-502 manufactured by Shin-Etsu Chemical Co., Ltd. and Z-6033 manufactured by Dow Corning Toray Co., Ltd.), 3-methacryloxypropyltrimethoxysilane (examples of the commercially available product include KBM-503 manufactured by Shin-Etsu Chemical Co., Ltd., A-174 manufactured by Momentive Performance Materials Japan LLC, Z-6030 manufactured by Dow Corning Toray Co., Ltd., GENIOSIL GF31 manufactured by Wacker Asahikasei Silicone Co., Ltd., and Sila-Ace S710 manufactured by Nichibi Trading Co., Ltd.), 3-methacryloxypropylmethyldiethoxysilane (an example of the commercially available product is KBE-502 manufactured by Shin-Etsu Chemical Co., Ltd.), 3-methacryloxypropyltriethoxysilane (examples include KBE-503 manufactured by Shin-Etsu Chemical Co., Ltd. and Y-9936 manufactured by Momentive Performance Materials Japan LLC), and methacryloxyoctyltrimethoxysilane (KBM-5803 manufactured by Shin-Etsu Chemical Co., Ltd.). Further examples are, as a silane coupling agent having an epoxy group, 2-(3,4-epoxycyclohexyl)ethyltrimethoxysilane (examples of the commercially available product include KBM-303 manufactured by Shin-Etsu Chemical Co., Ltd., A-186 manufactured by Momentive Performance Materials Japan LLC, Z-6043 manufactured by Dow Corning Toray Co., Ltd., and Sila-Ace S530 manufactured by Nichibi Trading Co., Ltd.), 3-glycidoxypropylmethyldimethoxysilane (examples of the commercially available product include KBM-402 manufactured by Shin-Etsu Chemical Co., Ltd., Z-6044 manufactured by Dow Corning Toray Co., Ltd., and Sila-Ace S520 manufactured by Nichibi Trading Co., Ltd.), 3-glycidoxypropyltrimethoxysilane (examples of the commercially available product include KBM-403 manufactured by Shin-Etsu Chemical Co., Ltd., A-187 manufactured by Momentive Performance Materials Japan LLC, Z-6040 manufactured by Dow Corning Toray Co., Ltd., GENIOSIL GF80 manufactured by Wacker Asahikasei Silicone Co., Ltd., and Sila-Ace S510 manufactured by Nichibi Trading Co., Ltd.), 3-glycidoxypropylmethyldiethoxysilane (an example of the commercially available product is KBE-402 manufactured by Shin-Etsu Chemical Co., Ltd.), 3-glycidoxypropyltriethoxysilane (examples of the commercially available product include KBE-403 manufactured by Shin-Etsu Chemical Co., Ltd., A-1871 manufactured by Momentive Performance Materials Japan LLC, and GENIOSIL GF82 manufactured by Wacker Asahikasei Silicone Co., Ltd.), and glycidoxyoctyltrimethoxysilane (an example of the commercially available product is KBM-4803 manufactured by Shin-Etsu Chemical Co., Ltd.). Further examples are, as a silane coupling agent having an amino group, N-2-(aminoethyl)-3-aminopropylmethyldimethoxysilane (examples include KBM-602 manufactured by Shin-Etsu Chemical Co., Ltd., A-2120 manufactured by Momentive Performance Materials Japan LLC, GENIOSIL GF-95 manufactured by Wacker Asahikasei Silicone Co., Ltd., and Sila-Ace S310 manufactured by Nichibi Trading Co., Ltd.), N-2-(aminoethyl)-3-aminopropyltrimethoxysilane (examples of the commercially available product include KBM-603 manufactured by Shin-Etsu Chemical Co., Ltd., A-1120 manufactured by Momentive Performance Materials Japan LLC, A-1122 manufactured by Momentive Performance Materials Japan LLC, Z-6020 manufactured by Dow Corning Toray Co., Ltd., Z-6094 manufactured by Dow Corning Toray Co., Ltd., GENIOSIL GF-91 manufactured by Wacker Asahikasei Silicone Co., Ltd., and Sila-Ace S320 manufactured by Nichibi Trading Co., Ltd.), 3-aminopropyltrimethoxysilane (examples of the commercially available product include KBM-903 manufactured by Shin-Etsu Chemical Co., Ltd., A-1110 manufactured by Momentive Performance Materials Japan LLC, Z-6610 manufactured by Dow Corning Toray Co., Ltd., and Sila-Ace S360 manufactured by Nichibi Trading Co., Ltd.), 3-aminopropyltriethoxysilane (examples of the commercially available product include KBE-903 manufactured by Shin-Etsu Chemical Co., Ltd., A-1100 manufactured by Momentive Performance Materials Japan LLC, Z-6011 manufactured by Dow Corning Toray Co., Ltd., and Sila-Ace S330 manufactured by Nichibi Trading Co., Ltd.), 3-triethoxysilyl-N-(1,3-dimethyl-butylidene)propylamine (examples of the commercially available product include KBE-9103 manufactured by Shin-Etsu Chemical Co., Ltd. and Sila-Ace S340 manufactured by Nichibi Trading Co., Ltd.), N-phenyl-3-aminopropyltrimethoxysilane (examples of the commercially available product include KBM-573 manufactured by Shin-Etsu Chemical Co., Ltd., Y-9669 manufactured by Momentive Performance Materials Japan LLC, and Z-6883 manufactured by Dow Corning Toray Co., Ltd.), N,N'-bis[3-(trimethoxysilyl)propyl]ethylenediamine (an example of the commercially available product is Sila-Ace XS1003 manufactured by Nichibi Trading Co., Ltd.), and hydrochlorid salt of N-(vinylbenzyl)-2-aminoethyl-3-aminopropyltrimethoxysilane (examples of the commercially available product include KBM-575 manufactured by Shin-Etsu Chemical Co., Ltd., Z-6032 manufactured by Dow Corning Toray Co., Ltd., and Sila-Ace S350 manufactured by Nichibi Trading Co., Ltd.). Another example is, as a silane coupling agent having an isocyanurate group, tris-(trimethoxysilylpropyl)isocyanurate (an example of the commercially available product is KBM-9659 manufactured by Shin-Etsu Chemical Co., Ltd.). Further examples are, as a silane coupling agent having a mercapto group, 3-mercaptopropylmethyldimethoxysilane (examples of the commercially available product include KBM-802 manufactured by Shin-Etsu Chemical Co., Ltd. and Z-6852 manufactured by Dow Corning Toray Co., Ltd.), 3-mercaptopropyltrimethoxysilane (examples of the commercially available product include KBM-803 manufactured by Shin-Etsu Chemical Co., Ltd., A-189 manufactured by Momentive Performance Materials Japan LLC, Z-6062 manufactured by Dow Corning Toray Co., Ltd., and Sila-Ace S810 manufactured by Nichibi Trading Co., Ltd.), and 3-mercaptopropyltriethoxysilane (examples of the commercially available product include A-1891 manufactured by Momentive Performance Materials Japan LLC and Z-6911 manufactured by Dow Corning Toray Co., Ltd.). Further examples are, as a silane coupling agent having a ureide group, 3-ureidepropyltrialkoxysilane (an example of the commercially available product is KBE-585 manufactured by Shin-Etsu Chemical Co., Ltd.), 3-ureidepropyltrimethoxysilane, and 3-ureidepropyltriethoxysilane (an example of the commercially available product is A-1160 manufactured by Momentive Performance Materials Japan LLC). A further example is, as a silane coupling agent having a sulfide group, bis(triethoxysilylpropyl)tetrasulfide. A further example is, as a silane coupling agent having a thioester group, 3-octanoylthio-1-propyltriethoxysilane (an example of the commercially available product is A-LINK599 manufactured by Momentive Performance Materials Japan LLC). Further examples are, as a silane coupling agent having an isocyanate group, 3-isocyanatepropyltriethoxysilane (examples of the commercially available product include KBE-9007 manufactured by Shin-Etsu Chemical Co., Ltd. and A-1310 manufactured by Momentive Performance Materials Japan LLC ) and 3-isocyanatepropyltrimethoxysilane (examples of the commercially available product include Y-5187 manufactured by Momentive Performance Materials Japan LLC and GENIOSIL GF40 manufactured by Wacker Asahikasei Silicone Co., Ltd.).

### · Other Additive Agents

The resin composition of the present disclosure may be added with other additive agents within the range that does not impair the object of the present invention. Examples thereof include carbon black, titanium black, an ion trapping agent, a levelling agent, an antioxidant, a defoamer, a thixotropic agent, a viscosity modifier, a flame retardant, a colorant, and a solvent. The type and added amount of each additive agent are those known in the art.

### == Utilization Method of Resin Composition ==

Examples of the resin composition disclosed herein as a one-component epoxy resin include a sealing material and a filling material for electronic components, a dam material, an electrically conductive or insulating adhesive agent, a die attach material, a film, a coating agent, and a shielding material. This resin composition can also be used in a paint, composite materials such as a pipe material and a tank material, civil engineering and construction materials such as a floor material and a membrane, and an adhesive agent. However, the utilization method is not limited thereto.

### == Synthesis Method of Compound ==

### Synthesis of (compound 1) 1-[([1,1'-biphenyl]-2-yl)oxy]-3-(2-methyl-1H-imidazole-1-yl)propan-2-ol

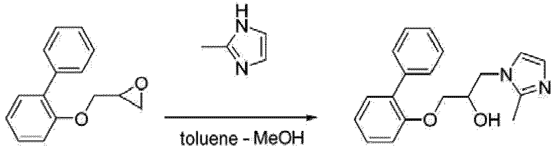

A solution obtained by dissolving 2-methyl-1-H-imidazole (manufactured by Shikoku Chemicals Corporation, 150 g, 1.83 mol) in a mixed solvent of toluene (443 mL) and methanol (121 mL) at room temperature was heated to 80°C and refluxed while stirring. To the resultant solution, a solution obtained by dissolving 2-{[([1,1'-biphenyl]-2-yl)oxy]methyl}oxirane (manufactured by Sanko Co., Ltd., 210 g, 0.913 mol, epoxy equivalent weight: 230 g/eq) in toluene (363 mL) at room temperature was added at a drop rate of 3.75 mL/min. After the total amount was dropped, the obtained mixture was stirred at 80°C for 75 minutes. Thereafter, the solvent was distilled away from the obtained reaction product at 50°C using an evaporator to obtain a crude product (392 g). It is noted that the obtained crude product is defined as compound 1'.

The obtained crude product (380 g) was added to methanol (1514 mL), heated to 50°C, and dissolved while stirring. Thereafter, concentration was performed until the total amount of methanol reached 1226 mL, and suction filtration was further performed. The obtained solution was heated to 50°C again and then left to stand for 16 hours while stirring at room temperature. After the obtained suspension liquid was suction filtered, the residue was washed with pure water (600 mL × 4 times). The resultant residue was dried by an oven at 40°C for 178 hours to obtain 1-[([1,1'-biphenyl]-2-yl)oxy]-3-(2-methyl-1H-imidazole-1-yl)propan-2-ol (134 g, yield: 60%) as a white solid. Measured values for physical properties of the product are as follows.

1-[([1,1'-biphenyl]-2-yl)oxy]-3-(2-methyl-1H-imidazole-1-yl)propan-2-ol ¹H NMR (400 MHz, METHANOL-d₄) δ ppm 2.15 (s, 3H) 3.80-3.90 (m, 2H) 3.95-4.07 (m, 3H) 6.73 (d, 1H) 6.81 (d, 1H) 7.02-7.07 (m, 2H) 7.28-7.34 (m, 3H) 7.41 (t, 2H) 7.50-7.54 (d, 2H).

HRMS (ESI) calcd for C19H20N2O2 [M + H]+ Exact Mass: 309.153, found 309.159.

### Synthesis of (compound 2) 1-[([1,1'-biphenyl]-3-yl)oxy]-3-(2-methyl-1H-imidazole-1-yl)propan-2-ol

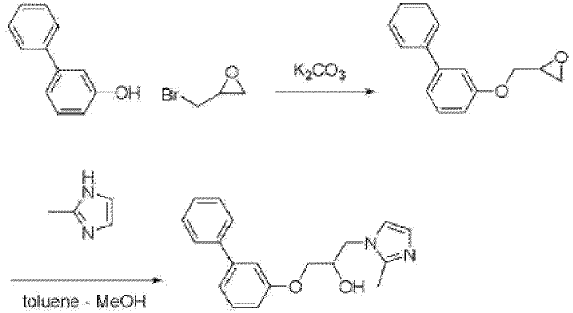

First, 3-phenylphenol (manufactured by Tokyo Chemical Industry Co., Ltd., 33.7 g, 198 mmol) and potassium carbonate (manufactured by Tokyo Chemical Industry Co., Ltd., 35.5 g, 257 mmol) were added to epibromohydrin (manufactured by Tokyo Chemical Industry Co., Ltd., 48.7 mL, 593 mmol). The mixture wad heated to 120°C and stirred for 4.5 hours. The obtained solution was cooled to room temperature and added with dichloromethane (300 mL), and the solid was filtered out. A liquid obtained by washing this solid with dichloromethane was mixed to the filtrate, and the solvent was distilled away under reduced pressure. The obtained solid was dissolved in dichloromethane (200 mL) and added with silica gel (150 g). The mixture was concentrated under reduced pressure. The obtained solution was purified by medium pressure column chromatography (silica gel 200 g, n-hexane/chloromethane = 50/50 to 35/65), and a fraction containing an object substance was recovered and concentrated to obtain 2-{[([1,1'-biphenyl]-3-yl)oxy]methyl}oxirane (37.0 g, 164 mmol) as a colorless oily matter.

Next, 2-methyl-1H-imidazole (manufactured by Shikoku Chemicals Corporation, 40.3 g, 491 mmol) was dissolved in a mixed solvent of toluene (130 mL) and methanol (30 mL). The obtained solution was heated to 80°C. Furthermore, to the resultant solution, a toluene (230 mL) solution of 2-{ [([1,1'-biphenyl]-3-yl)oxy]methyl}oxirane (37.0 g, 164 mmol) was dropped over 2 hours. Thereafter, the product was stirred at 80°C for 4 hours. The obtained solution was cooled to room temperature and concentrated under reduced pressure to obtain a solid. The solid was suspended in methanol (50 mL) and dissolved by increasing in temperature to 60°C. Then, the resultant product was added with pure water (100 mL) and thereafter cooled to room temperature. As a result, this was separated into two layers. Furthermore, the product was stirred under ice bath. The precipitated solid was filtered off, washed with pure water, and dried under reduced pressure. The obtained solid was suspended in methanol (150 mL) and dissolved by heating to 60°C. Thereafter, the product was cooled to room temperature. The precipitated solid was filtered off, washed with pure water, and dried under reduced pressure to obtain 1-[([1,1'-biphenyl]-3-yl)oxy]-3-(2-methyl-1H-imidazole-1-yl)propan-2-ol (27.8 g, yield: 55%) as a colorless solid. Measured values for physical properties of the product are as follows.

1-[([1,1'-biphenyl]-3-yl)oxy]-3-(2-methyl-1H-imidazole-1-yl)propan-2-ol ¹H NMR (400 MHz, METHANOL-d₄) δ ppm 2.37 (s, 3H) 3.95-3.99 (m, 2H) 4.08-4.12 (m, 1H) 4.18-4.24 (m, 2H) 6.79-6.80 (m, 1H) 6.92 (dd, 1H) 7.02-7.03 (m, 1H) 7.16-7.21 (m, 2H) 7.29-7.36 (m, 2H) 7.41 (t, 2H) 7.58 (d, 2H).

HRMS (ESI) calcd for C19H20N2O2 [M + H]+ Exact Mass: 309.160, found 309.159.

### Synthesis of (compound 3) 1-[([1,1'-biphenyl]-4-yl)oxy]-3-(2-methyl-1H-imidazole-1-yl)propan-2-ol

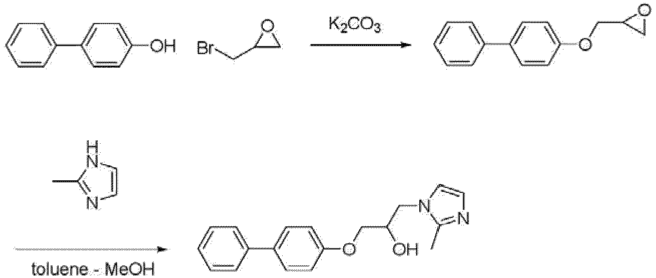

First, 4-phenylphenol (manufactured by Tokyo Chemical Industry Co., Ltd., 5.00 g, 29.4 mmol) and potassium carbonate (manufactured by Tokyo Chemical Industry Co., Ltd., 5.28 g, 38.2 mmol) were added to epibromohydrin (manufactured by Tokyo Chemical Industry Co., Ltd., 7.23 mL, 88.1 mmol). The mixture was heated to 120°C and stirred for 3 hours. The obtained solution was cooled to room temperature and thereafter added with dichloromethane (30 mL), and the solid was filtered out. A wash liquid obtained by washing this solid with dichloromethane was mixed to the filtrate. The obtained solution was concentrated under reduced pressure. The obtained solid was purified by medium pressure column chromatography (silica gel 100 g, n-hexane/dichloromethane = 50/50 to 35/65), and a fraction containing an object substance was recovered and concentrated to obtain 2-{ [([1,1'-biphenyl]-4-yl)oxy]methyl}oxirane (5.49 g, 24.3 mmol) as a colorless solid.

Next, 2-methyl-1H-imidazole (manufactured by Tokyo Chemical Industry Co., Ltd., 3.98 g, 48.5 mmol) was dissolved in a mixed solvent of toluene (8 mL) and methanol (4 mL). The solution was heated to 80°C. Thereafter, to the resultant solution, a toluene (35 mL) solution of 2-{[([1,1'-biphenyl]-4-yl)oxy]methyl}oxirane (5.49 g, 24.3 mmol) was dropped over 1 hour. Thereafter, the product was stirred at 80°C for 3.5 hours. The obtained solution was cooled to room temperature and thereafter concentrated under reduced pressure. The obtained solid was suspended in methanol (15 mL), and the solid was filtered out. A liquid obtained by washing this solid with methanol was mixed to the filtrate. The obtained solution was concentrated under reduced pressure. The obtained solid was purified by medium pressure column chromatography (silica gel 100 g, dichloromethane/methanol = 98/2 to 90/10), and a fraction containing an object substance was recovered and concentrated to obtain 1-[([1,1'-biphenyl]-4-yl)oxy]-3-(2-methyl-1H-imidazole-1-yl)propan-2-ol (4.53 g, 14.7 mmol, yield: 61%) as a colorless solid. Measured values for physical properties of the product are as follows.

1-[([1,1'-biphenyl]-4-yl)oxy]-3-(2-methyl-1H-imidazole-1-yl)propan-2-ol ¹H NMR (400 MHz, METHANOL-d₄) δ ppm 2.37 (s, 3H) 3.91-3.99 (m, 2H) 4.08-4.12 (m, 1H) 4.16-4.24 (m, 2H) 6.80 (d, 1H) 7.00-7.04 (m, 3H) 7.26 (t, 1H) 7.38 (t, 2H) 7.51-7.56 (m, 4H).

HRMS (ESI) calcd for C19H20N2O2 [M + H]+ Exact Mass: 309.160, found 309.159.

### Synthesis of (compound 4) 1-[([1,1'-biphenyl]-2-yl)oxy]-3-(2-undecyl-1H-imidazol-1-yl)propan-2-ol

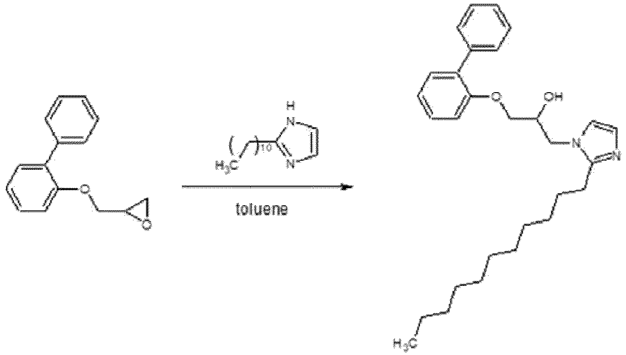

To toluene (64 mL), 2-undecyl-1H-imidazole (manufactured by Shikoku Chemicals Corporation, 53.07 g, 239 mmol) was added. The solution was heated to 80°C. Thereafter, to the resultant solution, a toluene (190 mL) solution of 2-{[([1,1'-biphenyl]-2-yl)oxy]methyl}oxirane (manufactured by Sanko Co., Ltd., 30.0 g, 133 mmol) was dropped over 4.5 hours. Thereafter, the product was stirred at the same temperature for 4 hours. The reaction solution was cooled to room temperature and thereafter concentrated under reduced pressure to obtain a residue (84.4 g). The obtained residue (67.1 g) was purified by medium pressure column chromatography (silica gel, dichloromethane/methanol = 99/1 to 90/10), and a fraction containing an object substance was concentrated to obtain 1-[([1,1'-biphenyl]-2-yl)oxy]-3-(2-undecyl-1H-imidazole-1-yl)propan-2-ol (35.6 g) as a colorless solid. To the obtained 1-[([1,1'-biphenyl]-2-yl)oxy]-3-(2-undecyl-1H-imidazole-1-yl)propan-2-ol (35.6 g), acetonitrile (200 mL) was added. The mixture was subjected to ultrasonic waves for 30 minutes by ultrasonic cleaning, filtered, and washed with acetonitrile (10 mL × 5). The solid was dried under reduced pressure to obtain 1-[([1,1'-biphenyl]-2-yl)oxy]-3-(2-undecyl-1H-imidazole-1-yl)propan-2-ol (30.8 g, 68.7 mmol, yield: 65%) as a colorless solid. Measured values for physical properties of the product are as follows.

1-[([1,1'-biphenyl]-2-yl)oxy]-3-(2-undecyl-1H-imidazole-1-yl)propan-2-ol ¹H NMR (400 MHz, METHANOL-d₄) δ ppm 0.87 (t, 3H) 1.15-1.30 (m, 16H) 1.51-1.55 (m, 2H) 2.46 (t, 2H) 3.83-3.89 (m, 2H) 3.94-4.00 (m, 2H) 4.02-4.04 (m, 1H) 6.76 (d, 1H) 6.84 (s, 1H) 7.01-7.05 (m, 2H) 7.27-7.32 (m, 3H) 7.40 (t, 2H) 7.53 (d, 2H). HRMS (ESI) calcd for C29H40N2O2 [M + H]+ Exact Mass: 449.316, found 449.316.

### Synthesis of (compound 5) 1-(2-methyl-1H-imidazole-1-yl)-3-phenoxypropan-2-ol

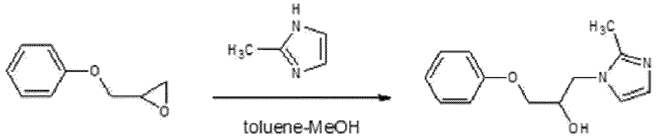

In a mixed solvent of toluene (78.7 mL) and methanol (17.7 mL), 2-methyl-1H-imidazole (manufactured by Shikoku Chemicals Corporation, 21.8 g, 266 mmol) was dissolved. The solution was heated to 80°C. Furthermore, to this solution, a toluene (38.1 mL) solution of 2-(phenoxymethyl)oxirane (manufactured by Nagase ChemteX Corporation, DENACOL EX-141, 22.0 g, 147 mmol) was dropped over 1 hour. Thereafter, the product was stirred at the same temperature for 1 hour. The obtained solution was cooled to room temperature, and the solvent was distilled away under reduced pressure to obtain 1-(2-methyl-1H-imidazole-1-yl)-3-phenoxypropan-2-ol (47.85 g) as a yellow solid. The product was identified by ¹HNMR to confirm that an object substance was obtained.

### Synthesis of (compound 6) α,α'-[(1-methylethylidene)bis(4,1-phenyleneoxymethylene)]bis[2-methyl-1H-imidazole-1-ethanol

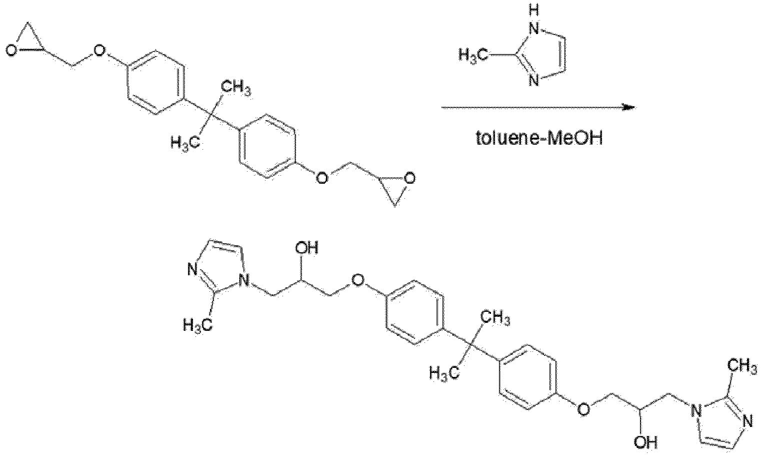

In a mixed solvent of toluene (60.6 mL) and methanol (16.8 mL), 2-methyl-1H-imidazole (manufactured by Shikoku Chemicals Corporation, 43.8 g, 533 mmol) was dissolved. The solution was heated to 80°C. Furthermore, to this solution, a toluene (83.2 mL) solution of 2,2'-{propane-2,2-diylbis[(4,1-phenylene)oxymethylene]}bis(oxirane) (manufactured by Osaka Soda Co., Ltd., 48.0 g, 133 mmol) was dropped over 2 hours. Thereafter, the product was stirred at 80°C for 2 hours. The obtained solution was cooled to room temperature, and the solvent was distilled away under reduced pressure to obtain α,α'-[(1-methylethylidene)bis(4,1-phenyleneoxymethylene)]bis[2-methyl-1H-imidazole-1-ethanol (112.9 g) as a yellow solid. The product was identified by ¹HNMR to confirm that an object substance was obtained.

### (Compound 7)

### Synthesis of 1-(2-methylimidazol-1-yl)-3-naphthalen-1-yloxypropan-2-ol

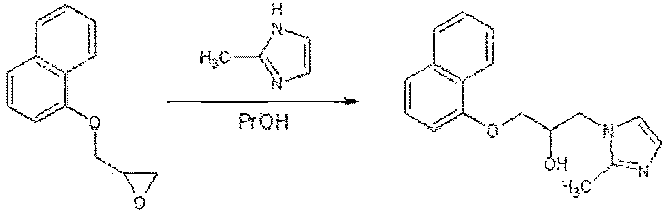

Curezol 2MZ-H (manufactured by Shikoku Chemicals Corporation, 1.29 g, 15.7 mmol) was dissolved in 2-propanol (3.5 mL) and heated to 60°C. Thereafter, the product was added with 3-(1-naphthoxy)-1,2-epoxypropane (manufactured by Dalian Research and Design Institute of Chemical Industry, 3.00 g, 15 mmol) in small increments. Thereafter, the mixture was stirred at the same temperature for 2.5 hours. The reaction solution was cooled to room temperature, and the precipitated solid was filtered off, washed with 2-propanol, and dried under reduced pressure at 50°C to obtain 2.03 g (yield: 47%) of an object substance. Measured values for physical properties of the product are as follows.

1H NMR (400 MHz, DMSO-d6) δ ppm 2.28 (s, 3H), 3.98-4.13 (m, 3H), 4.15-4.27 (m, 2H), 5.70 (bs, 1H), 6.71 (d 1.2 Hz, 1H), 6.93 (d 7.6 Hz, 1H), 7.05 (d 1.2 Hz, 1H), 7.40 (dd 7.6 Hz, 7.6 Hz, 1H), 7.44-7.56 (m, 3H), 7.82-7.92 (m, 1H), 8.25-8.31 (m, 1H).

### == Characteristics I of Resin Composition ==

In the present example, it is demonstrated that the resin composition containing the curing catalyst described herein has excellent characteristics.

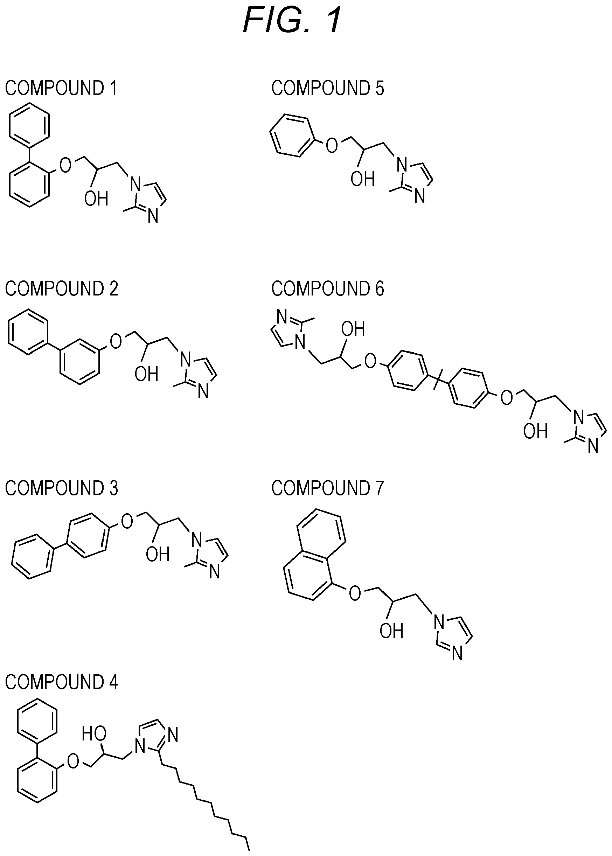

First, compounds 1 to 7 and 1' illustrated in Table 1 were prepared as a curing catalyst. The structural formulas of the compounds are illustrated in Fig. 1. Synthesis methods of compounds 1 to 7 and 1' are as described above. The melting point was measured using a differential scanning calorimeter (DSC 204 F1 Phoenix (registered trademark)) (manufactured by NETZSCH). First, 5 mg of the synthesized compound was weighed into an aluminum pan, and the aluminum pan was sealed with an aluminum lid. Thereafter, the center of this lid was punched with a needle to prepare a measurement sample. Next, this measurement sample was measured for a heat flow (mW/mg) while increasing in temperature under the conditions of nitrogen atmosphere (100 mL/min), a temperature ranging from 25 to 250°C, and a rate of 10°C/min. A temperature (referred to as a melting peak temperature herein), corresponding to a melting point, at which a peak is obtained was calculated by an analysis software (NETZSCH Proteus-Thermal Analysis Version 6.1.0 B). In compounds 1 to 4 and 7 (crystalline matter), a clear melting peak was obtained. However, in compound 5 (oily) and compound 6 (solid matter), a clear melting peak was not obtained.

**[Table 1]**

| Compound | Epoxy resin | Amine compound | Melting peak temperature (°C) |
|---|---|---|---|
| 1 | o-Phenylphenol glycidyl ether | 2-Methyl imidazole | 160 |
| 2 | m-Phenylphenol glycidyl ether | 2-Methyl imidazole | 134 |
| 3 | p-Phenylphenol glycidyl ether | 2-Methyl imidazole | 173 |
| 4 | o-Phenylphenol glycidyl ether | 2-Undecyl imidazole | 88 |
| 5 | Phenyl glycidyl ether | 2-Methyl imidazole | None |
| 6 | Bisphenol A type epoxy | 2-Methyl imidazole | None |
| 1' | o-Phenylphenol glycidyl ether | 2-Methyl imidazole | 109 |
| 7 | 1-Naphthyl glycidyl ether | 2-Methyl imidazole | 177 |

Compounds 1 to 7 and 1'were each ground in a mortar and thereafter poured in EXA835LV (manufactured by DIC Corporation, mixture of bisphenol A type epoxy resin and bisphenol F type epoxy resin) as an epoxy resin while stirring by hand. It is noted that the ratios thereof were 12 wt% for the curing catalyst and 88 wt% for the epoxy resin. These were blended to some extent by stirring and thereafter ground in a mortar until aggregates disappeared. The product was stirred and defoamed under vacuum using a planetary stirring and defoaming apparatus to obtain a resin composition.

When prepared and after stored for 24 hours under the environment of 25°C ± 2°C and 50% RH ± 10% RH, the resin composition was measured using an E type viscometer (TVE 25H: manufactured by Toki Sangyo Co., Ltd, rotor name: 3° × R9.7) at 5 rpm and 25°C in a previously set appropriate range (H, R, or U). The pot life was calculated according to (viscosity after 24 hours/viscosity when prepared). The gel time was measured using a gelation tester (GT-D-15A: manufactured by Yukari Giken Co.). A hot plate was set at 120°C, and the resin composition was transferred on the hot plate by a test bar. The gel time was defined as a time until the hardness of the resin composition becomes such that the resin composition does not change in shape even when touched by the test bar. The result is shown in Table 2.

**[Table 2]**

| Example and Comparative Example | | Example | | | | | Comparative Example | | |
|---|---|---|---|---|---|---|---|---|---|
| | | 1 | 2 | 3 | 4 | 5 | 1 | 2 | 3 |
| Curing catalyst | | Compound 1 | Compound 2 | Compound 3 | Compound 4 | Compound 7 | Compound 1' | Compound 5 | Compound 6 |
| Evaluation result of curing catalyst | Maximum heat flow (mW) | -5.52 | -5.61 | -4.67 | -2.92 | -3.18 | -0.59 | ND | ND |
| | Melting heat (J/g) | 139 | 135 | 160 | 82 | 116 | 107 | ND | ND |
| | Maximum heat flow/melting heat (absolute value) | 0.040 | 0.042 | 0.029 | 0.035 | 0.027 | 0.006 | ND | ND |
| | Temperature increasing | 1.41 | 1.03 | 1.41 | 1.05 | 1.01 | 1.11 | ND | ND |
| Evaluation result of | Pot life, viscosity change ratio (times) after 24 hr | 1.00 | 1.10 | 1.00 | 1.00 | 1.01 | UM | UM | UM |
| | 120°C Gel time | 1 min and 19 see | 1 min and 12 see | 1 min and 40 sec | 3 min and 11 see | 1 min and 3 sec | - | - | - |

| | | | | | | | | | |
|---|---|---|---|---|---|---|---|---|---|
| ND: Not Detected UM: Unmeasurable | | | | | | | | | |

In the present example, characteristics of compound 1', which is a crude product of compound 1, are measured to demonstrate that a purification degree affects characteristics of resin. It is noted that as described herein, the crude product refers to a product that is not subjected to a purification process such as recrystallization or column purification.

First, when the melting peak temperature of the curing catalyst was calculated as described above, a heat flow at a peak temperature (i.e., maximum heat flow) and an area of a peak (i.e., melting heat) were analyzed by the analysis software of the calorimeter. Then, an absolute value of (maximum heat flow [mW/mg])/(melting heat [J/g]) was calculated.

Next, the heat flow (mW/mg) of the curing catalyst was measured in the range of 25 to 250°C, under the conditions of a temperature increasing rate of 10°C/min and a temperature increasing rate of 50°C/min. The melting onset temperature (°C) under each condition was analyzed. As temperature increasing rate dependency, (melting onset temperature at a temperature increasing rate of 50°C/min)/(melting onset temperature at a temperature increasing rate of 10°C/min) was calculated (Table 2). It is noted that the melting onset temperature is a temperature at which the base line of DSC intersects with a tangent line having the largest gradient of tangent lines of the melting peak curve on the lower temperature side than the melting peak temperature.

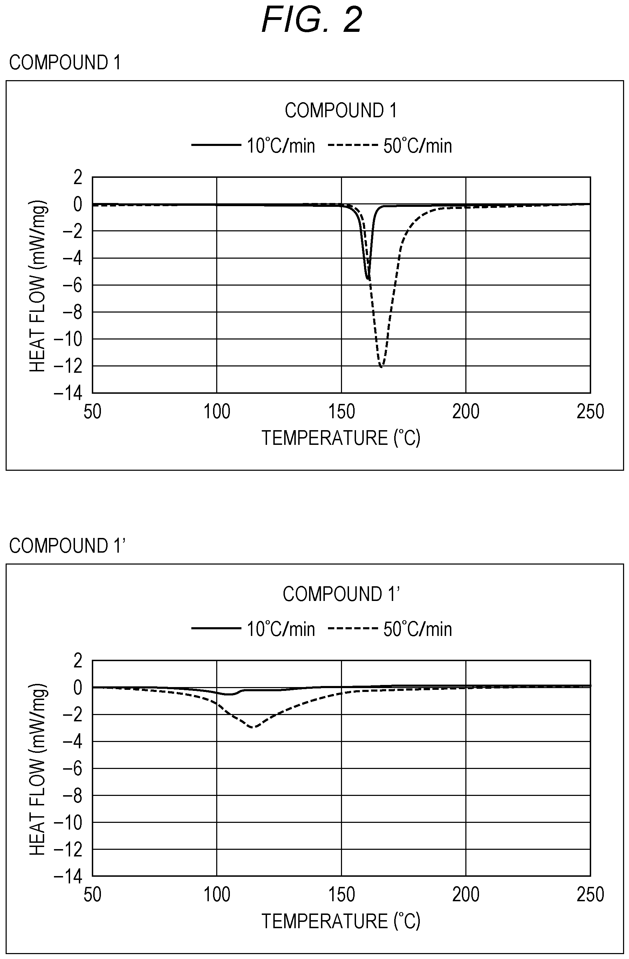

As illustrated in Fig. 2, the melting heats are at the substantially same level regardless of purification. However, in a highly purified compound, the absolute value of maximum heat flow/melting heat is high, and the temperature increasing rate dependency is low. In Examples 1 to 5 (when compounds 1 to 4 and 7 were used) in which the absolute value of (maximum heat flow [mW/mg])/(melting heat [J/g]) is high, and the temperature increasing rate dependency is low, the viscosity hardly changed even after 24 hours of the preparation of the resin composition. However, in Comparative Example 1 (compound 1') in which the absolute value of (maximum heat flow [mW/mg])/(melting heat [J/g]) is low, and the temperature increasing rate dependency is high, and in Comparative Examples 2 and 3 (compounds 5 and 6) in which the melting peak could not be detected (illustrated as ND in the table) resulting in failing to calculate the absolute value of (maximum heat flow [mW/mg])/(melting heat [J/g]) and the temperature increasing rate dependency, the viscosity reached too high to be measured after 24 hours (illustrated as UM in the table). In this manner, the resin compositions of Examples had longer pot life.

Also, in Examples 1 to 5, gelation occurred at 120°C. It is noted that in Comparative Examples 1 to 3, the pot life was too short to withstand actual use, resulting in failing to measure the gel time.

In this manner, compared to compound 1' as a crude product of compound 1 (Comparative Example 1), a monofunctional phenyl epoxy adduct (Comparative Example 2), and a bifunctional epoxy adduct (Comparative Example 3), the epoxy amine adduct disclosed herein has good pot life and sufficient curing properties, and therefore a resin composition having better characteristics can be obtained.

### == Characteristic II of Resin Composition ==

Examples 6 to 8 demonstrate that a resin composition containing compound 1 and an epoxy resin exhibits excellent characteristics regardless of the type of the epoxy resin.

As the curing catalyst, compound 1 was used in Examples 6 to 8. As the epoxy resin, EXA835LV (manufactured by DIC Corporation, mixture of bisphenol A type epoxy resin and bisphenol F type epoxy resin), YDF8170 (manufactured by Nippon Steel Chemical & Material Co., Ltd., bisphenol F type epoxy resin), and CDMDG (manufactured by Showa Denko K.K., aliphatic epoxy resin) were used. These epoxy resins are each cured through homopolymerization of epoxy, curing reaction by an acid anhydride, and curing reaction by a phenol-based substance. It is noted that the pot life and gel time were measured under the same experiment conditions as in Table 2, except that the temperature for measuring the gel time was increased to 150°C.

**[Table 3]**

| Example and Comparative Example | | Example | | |
|---|---|---|---|---|
| | | 6 | 7 | 8 |
| Curing catalyst | Compound 1 (wt%) | 12 | 1 | 1 |
| Epoxy resin | EXA835LV(wt%) | | 4 | 57 |
| | YDF8170 (wt%) | | 38 | |
| | CDMDG (wt%) | 88 | | |
| Acid anhydride | YH306 (wt%) | | 57 | |
| Phenol resin | MEH8005 (wt%) | | | 42 |
| Evaluation result | Pot life, viscosity change ratio (times) after 24 hr | 1.0 | 1.2 | 1.4 |
| | 150°C Gel time | 7 min | 2 min | 6 min and 30 sec |

As illustrated in Examples 6 to 8, even when the epoxy resin is aliphatic epoxy resin or even when the curing agent is an acid anhydride or phenolic resin, the epoxy amine adduct described herein can have good pot life and achieve sufficient curing.

### INDUSTRIAL APPLICABILITY

According to the present invention, an epoxy amine adduct, a curing catalyst, a resin composition, a sealing material, an adhesive agent, and a cured product, which have good characteristics, can be obtained.

## Claims

1. An epoxy amine adduct,
wherein in differential scanning calorimetry (DSC), a value of (melting onset temperature at a temperature increasing rate of 50°C/min)/(melting onset temperature at a temperature increasing rate of 10°C/min) is 1.00 or more and 1.10 or less.

2. The epoxy amine adduct according to claim 1,
wherein the value of (melting onset temperature at a temperature increasing rate of 50°C/min)/(melting onset temperature at a temperature increasing rate of 10°C/min) is 1.01 or more and 1.05 or less.

3. The epoxy amine adduct according to claim 1 or 2,
wherein in differential scanning calorimetry (DSC) at a temperature increasing rate of 10°C/min, an absolute value of (maximum heat flow [mW/mg])/(melting heat [J/g]) in melting is 0.01 or more and 0.10 or less.

4. The epoxy amine adduct according to claim 3,
wherein the absolute value of (maximum heat flow [mW/mg])/(melting heat [J/g]) is 0.027 or more and 0.042 or less.

5. The epoxy amine adduct according to claim 3,
wherein the absolute value of (maximum heat flow [mW/mg])/(melting heat [J/g]) is 0.029 or more and 0.042 or less.

6. The epoxy amine adduct according to any one of claims 1 to 5,
wherein a compound to be adducted to amine has a biphenyl backbone and one epoxy group.

7. The epoxy amine adduct according to any one of claims 1 to 5,
wherein a compound to be adducted to amine has a naphthyl backbone and one epoxy group.

8. A curing catalyst for epoxy resin, comprising the epoxy amine adduct according to any one of claims 1 to 7.

9. A resin composition, comprising the curing catalyst according to claim 8.

10. A sealing material, comprising the resin composition according to claim 9.

11. An adhesive agent, comprising the resin composition according to claim 9.

12. A cured product of the resin composition according to claim 9.

13. A production method of the epoxy amine adduct according to any one of claims 1 to 7, comprising a step of adducting to amine a compound having a biphenyl backbone and one epoxy group.

14. A production method of the epoxy amine adduct according to any one of claims 1 to 7, comprising a step of adducting to amine a compound having a naphthyl backbone and one epoxy group.
